# EUROPÄISCHE PATENTSCHRIFT

(11) **EP 3 167 709 B1**
(45) Veröffentlichungstag und Bekanntmachung des Hinweises auf die Patenterteilung: **12.12.2018**
(21) Anmeldenummer: 16195210.6
(22) Anmeldetag: 24.10.2016
(51) Int. Cl.: A01J 25/12, A23C 19/00, A01J 25/13, A01J 25/15

(54) **VERFAHREN UND VORRICHTUNG ZUR HANDHABUNG VON KÄSELAIBEN**
PROCESS AND DEVICE FOR HANDLING OF CHEESE
PROCÉDÉ ET DISPOSITIF DE MANIPULATION DE MEULES DE FROMAGE

(30) Priorität: 13.11.2015 CH 16532015
(43) Veröffentlichungstag der Anmeldung: 17.05.2017
(73) Patentinhaber: Kalt Maschinenbau AG, 9604 Lütisburg (CH)
(72) Erfinder: Grüninger, Siegfried, 9011 St. Gallen (CH)
(74) Vertreter: Frommhold, Joachim

(56) Entgegenhaltungen:
- EP-A1- 1 769 676
- EP-A1- 2 710 888
- CH-A2- 704 208

## Beschreibung

Die Erfindung betrifft ein Verfahren zur Handhabung von Käselaiben und eine Vorrichtung hierzu, die insbesondere einer sogenannten Kassettenpresse mit runden oder eckigen Käseformen zuordenbar ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus für die Formen. Verteilkopf wie Wendemechanismus müssen dabei manuell bereitgestellt resp. gewechselt werden. Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen. Die Kassetten haben eine spaltminimierende Randausbildung und zum schieben der Kassetten ist eine mechanisierte Einrichtung vorgesehen.

Der Wanne kann zudem eine Ablage für zweite Formen, in denen die gepressten Rohkäselaibe umgeladen werden, zugeordnet sein (EP-A-1769676). Die Formen können mittels einer Rollenfördereinrichtung einer entsprechenden Handhabungseinrichtung der Presse einem weiteren Arbeitsabschnitt zugeführt werden.

Nach der EP-B-543185 ist ein Formdeckel über eine Kippeinrichtung mit dem Pressstempel verbindbar (selbstzentrierend), so dass infolge möglicher Kippbewegungen ein Ansaugen des Formdeckels an der Käsemesse vermieden wird. Die Form selbst ist rund oder viereckig und kann aus einem äusseren Behälter und einem inneren, gelochten Mantel bestehen.

Die gepressten Käselaibe können zum Beispiel mittels eines Greifers aus der Form entnommen werden, wobei vorgängig Luft in die Pressform eingeblasen wird um den Käselaib von der Formwand zu lösen (EP-B-1269832 oder DE-B-922448).

Der Kontakt der Käselaibe mit eingeblasener Luft oder anderen Gasen kann ein Sanitationsproblem darstellen. Um dies zu meiden wurde auch versucht, Käselaibe mittels Vakuumgreifer aus der Pressform zu entnehmen. Dies führt jedoch zur Zapfenbildung oder allgemein zur Beschädigung der Oberfläche oder gar zum einreissen des Laibs.

Eine weitere derartige Kassettenpresse ist in der CH704208A2 und der EP2710888A1 veröffentlicht. Die Kassettenpresse gemäss der CH704208A2 weist zwei Handhabungseinrichtungen auf, wobei die zweite, entlang der Längsseiten der Wanne verfahrbare Handhabungseinrichtung mit einer Wendeeinheit korrespondiert.
Die EP2710888A1 offenbart eine Kassettenpresse, die mit einer Rütteleinheit versehen ist, die einer horizontal angeordneten Ablage oder Fördereinrichtung für die gepressten Käselaibe zugeordnet ist.

Der Erfindung liegt nun die Aufgabe zugrunde, ein Verfahren zur automatischen Handhabung von Käselaiben zu entwickeln, mit dem insbesondere eine schonende, schnelle und exakte Entformung resp. Einformung der Käselaibe von einer Primärform in eine Sekundärform erreicht werden kann.

Die Aufgabe ist mit den Merkmalen des Patentanspruchs 1 gelöst. Erfindungsgemäss erfolgt
a) ein Rütteln oder Ausblasen von, in der Form, gepressten Käserohmasse, wobei vorgängig die Form resp. die Kassette mit den darin angeordneten Formen gedreht und abgesenkt wird und ein Abholstempel bis an den Käselaib in die Form einfährt und
b) ein Hubgreifer während der Senkbewegung der Form resp. der Kassette bis zum Anschlag an eine Abholvorrichtung abgesenkt wird,
c) der Käselaib in der Form einer Rüttelbewegung oder einem Ausblasvorgang ausgesetzt wird,
d) der Abholstempel nach dem Rütteln oder Ausblasen wieder aus der Form ausfährt,
e) die Form resp. Kassette nachfolgend angehoben, gedreht und in ihre Ausgangslage in die Kassettenpresse zurückgeführt und der Hubgreifer angehoben wird,
f) der Käselaib mittels einer Spanneinrichtung auf dem Hubgreifer fixiert wird,
g) der Hubgreifer zu einer Sekundärform für den Käselaib hin, bevorzugt nach unten verfahren wird, und
h) die Spanneinrichtung öffnet und der Käselaib in der Sekundärform positioniert wird.

Das ablösen des Käselaibs resp. der Käserohmasse von der inneren Wand der Form erfolgt durch ein Rütteln oder Ausblasen des gepressten Käselaibs unmittelbar resp. direkt vor der Entformung. Die Rüttelbewegung wird unmittelbar nach dem Wendevorgang der Form eingeleitet, damit jeder Käselaib danach auf einem Abholstempel aufliegen kann.

Eine Spezifizierung des erfindungsgemässen Verfahrens ist in den abhängigen Ansprüchen offenbart.

Die Rüttelung erfolgt nur kurzzeitig und mindestens einmal.

Die Rüttelbewegung kann horizontal oder vertikal erfolgen. Die Form wird dabei vorzugsweise in einen Rüttler abgesenkt.

Jeder Käselaib kann mit dem Abholstempel in die Sekundärform gestossen werden.

Die Käselaibe werden nicht nur schonend sondern auch hygienisch entformt und weiter transportiert.

Eine weitere Aufgabe besteht darin, eine Vorrichtung zur Handhabung von Käselaiben zu schaffen, die ein schnelles Umladen von Käselaiben ermöglicht. Diese Aufgabe ist mit den Merkmalen des Patentanspruchs 10 gelöst.

Bevorzugte Ausführungsformen sind in den abhängigen Ansprüchen offenbart. Die erfindungsgemässe Vorrichtung ist kompakt aufgebaut und ermöglicht ein automatisiertes Handhaben und insbesondere Greifen der Käselaibe und somit eine zügige Neubelegung der Kassettenpresse, da der Käse nur kurze Zeit in den Formen verweilen muss.

Die Erfindung wird nachfolgend in einem Ausführungsbeispiel anhand einer Zeichnung näher beschrieben. In der Zeichnung zeigen die
Fig. 1: eine Kassettenpresse in Teilansicht;
Fig. 2: einen erfindungsgemässen Hubgreifer mit Abholvorrichtung;
Fig. 3: einen erfindungsgemässen Hubgreifer mit Abholvorrichtung und Abholstempel;
Fig. 4: ein Spannbalken der erfindungsgemässen Vorrichtung mit Spannbacken;
Fig. 5: einen erfindungsgemässen Hubgreifer mit Abholvorrichtung und Ausstosser.

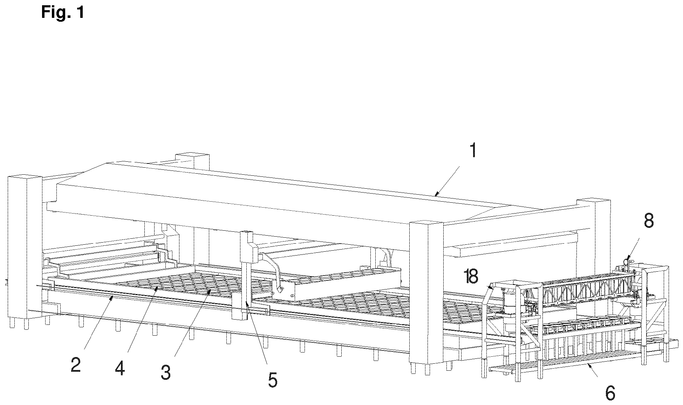

Eine Kassettenpresse 1 zum flüssigkeitsverringernden Pressen von Käserohmasse, umfasst unter Einbeziehung der Offenbarung der CH-A-704208 A und/oder der CH 706999 A
- eine in der Draufsicht rechteckige und oben offene Wanne 2 (Fig. 1) mit in der Draufsicht rechteckigen, oben offenen Kassetten 3, die in Reihen quer zur Längsrichtung der Wanne 2 nebeneinander angeordnet sind,
- Formen 4 zur Aufnahme der zu pressenden Käserohmasse, die in den Kassetten 3 angeordnet sind, wobei eine Form 4 Teil der Kassette 3 sein kann und zumindest einen Boden und einen Mantel mit mindestens einem Auslass für die abzupressende Flüssigkeit aufweist,
- auf den oberen Rändern, die die Aussenseiten des Kassettenblocks in der Wanne 2 in Längs- und Querrichtung bilden, können Randbleche in Höhe von einigen Zentimetern angeordnet sein, um ein einschwemmen der Käserohmasse (z. B. mittels eines Rohrverteilers o. a. Mittel) bis oberhalb der Kassettenoberkante zu ermöglichen,
- einen, auf Endsäulen gelagerten Presskopf mit einer Vielzahl, auf die Formen 4 ausgerichteten und nicht explizit dargestellten Pressstempel zum Pressen der Käserohmasse, z. B. entsprechend der Offenbarung der EP-B-543899 ausgebildet, sowie ggf. Niederhalter zum abdrücken des Presskopfes von den Kassetten 3,
- ein Rohrverteilsystem resp. einen Abfüllapparat zum Einschwemmen der Käserohmasse,
- mindestens ein Handlinggerät 5, das motorisch betrieben entlang der Längsseiten der Wanne 2 verfahrbar ist, zum anheben, verfahren und handhaben einer Kassette 3 ausserhalb der Wanne 2, insbesondere auch von und zu einer Vorrichtung 18 zum Entformen/Einformen am stirnseitigen Wannenrand Fig. 1).

Der Kassettenpresse 1 ist eine Vorrichtung 18 zur Handhabung der Käselaibe K zugeordnet, mit einer Einrichtung zum drehen/wenden der Kassette 3 um deren Längsachse (Wendeeinheit 8) und sie ist zudem mit einem, nahe zur Wendeeinheit 8 angeordneten Rüttler 7 versehen. Sie umfasst auch eine Förderstrecke 6 für Sekundärformen 14.

Die Vorrichtung 18 umfasst des weiteren einen vertikal verfahrbar gelagerten, der Förderstrecke 6 zugeordneten Hubgreifer 12, der zumindest mit einer Abholvorrichtung 13 und Einrichtungen zum Spannen der Käselaibe K versehen ist.

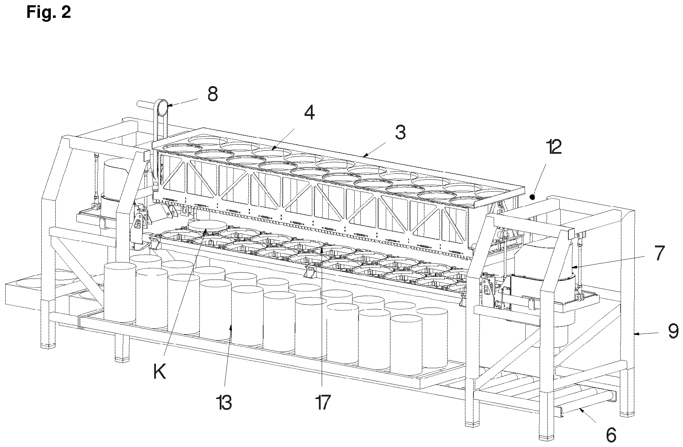

Die Vorrichtung 18 zur Handhabung der Käselaibe K mit einem Hubgreifer 12 gemäss Fig. 2 umfasst einen Rahmen 9 zur Aufnahme des Rüttlers 7 und der Wendeeinheit 8. Das Heben und Senken der Kassette 3 wird vom Handlinggerät 5 der Kassettenpresse ermöglicht. Der Hubgreifer 12 ist zwischen der Kassette 3 und der Förderstrecke 6 vertikal bewegbar. Die Spanneinrichtungen des Hubgreifers 12 sind Spannbacken.
Die Abholvorrichtung 13 befindet sich zwischen der Förderstrecke 6 und dem Hubgreifer 12 und ist horizontal verfahrbar.
Der Hubgreifer 12, die Abholvorrichtung 13 und Spannbacken 11 sind zum Beispiel pneumatisch oder elektrisch betätigbar.

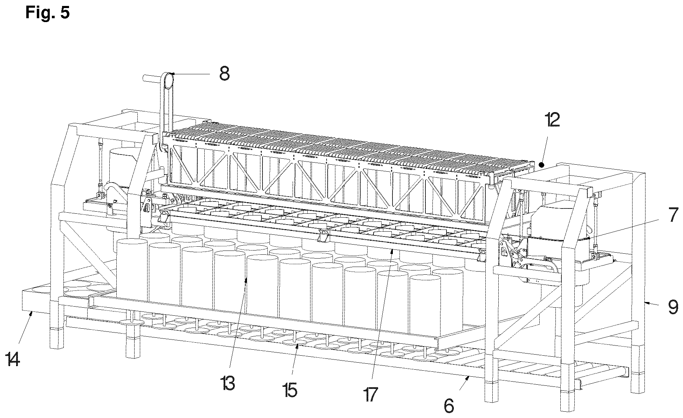

Zur Handhabung von, der Kassettenpresse 1 entnommenen Käselaiben K fährt die Abholvorrichtung 13 zunächst unter dem, vorgängig angehobenen Hubgreifer 12 in den Arbeitsraum 10 der Vorrichtung 18 ein und die bereits zugeführte Kassette 3 wird mit den Formen 4 um 180° gewendet, in den Rüttler 7 abgesenkt und über die Abholvorrichtung 13 gestülpt.
Im Takt der Senkbewegung der Kassette 3 resp. der Form 4 wird der Hubgreifer 12 bis zum Anschlagen an der Abholvorrichtung 13 gesenkt und der Rüttel- oder Ausblasvorgang wird ausgeführt. Die Käselaibe K werden von der Formwand gelöst und liegen auf der Abholvorrichtung 13 auf.
Danach wird bei einer Ausführungsform gemäss Fig. 5 die Kassette 3 mit den Formen 4 angehoben, wieder um 180° in die Ausgangslage gedreht und zur Kassettenpresse 1 verfahren.

Sind in weiterer, möglicher Ausgestaltung der erfindungsgemässen Vorrichtung 18 Einschubstempel vorhanden, wird der Hubgreifer 12 soweit angehoben, dass die Abholvorrichtung 13 unter ihnen ausfahren kann und die Spannbacken 11 des Spannrahmens 17 die Käselaibe K spannen können.

Danach wird der Hubgreifer 12 soweit zur Förderstrecke 6 verfahren, dass die Abholvorrichtung 13 erneut in den Arbeitsraum 10 einfahren kann und die Käselaibe K mit den Einschubstempeln in die Sekundärformen 14 eingestossen werden können, wozu vorgängig auch die Spannbacken 11 wieder geöffnet werden.
Anschliessend wird der Hubgreifer 12 bis zu seiner Ausgangslage angehoben und die Abholvorrichtung 13 kann aus dem Arbeitsraum 10 ausfahren.
Auf der Förderstrecke 6 werden die Sekundärformen 14 zu einer anderen Arbeitsstation verfahren und leere Sekundärformen 14 werden zugeführt.

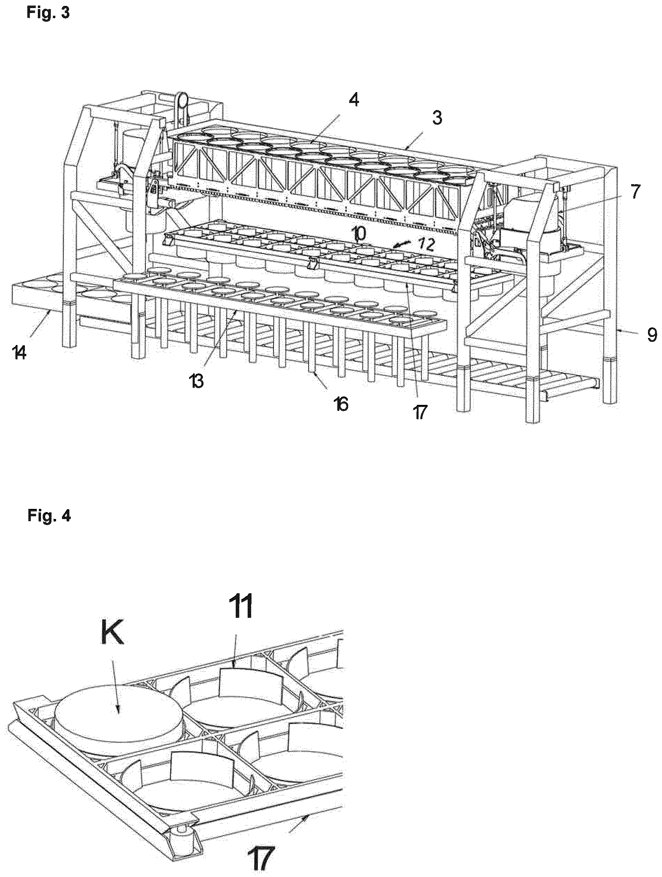

Die Vorrichtung 18 zur Handhabung der Käselaibe K mit einem Hubgreifer 12 in einer Ausführungsform gemäss Fig. 3 umfasst einen Rahmen 9 zur Aufnahme des Rüttlers 7 und der Wendeeinheit 8. Ein Heben und Senken der Kassette 3 wird durch das Handlinggerät 5 ermöglicht. Der Hubgreifer 12 ist zwischen der Kassette 3 und der Förderstrecke 6 vertikal bewegbar. Die Spanneinrichtungen des Hubgreifers 12 sind Spannbacken.
Die Abholvorrichtung 13 ist mit Abholstempeln 16 bestückt und befindet sich zwischen der Förderstrecke 6 und dem Hubgreifer 12, und sie ist horizontal verfahrbar.
Der Hubgreifer 12, die Abholvorrichtung 13, Abholstempel 16 und Spannbacken 11 sind zum Beispiel pneumatisch oder elektrisch betätigbar.

Zur Handhabung von, der Kassettenpresse 1 entnommenen Käselaiben K wird die bereits zugeführte Kassette 3 mit den Formen 4 um 180° gewendet und in den Rüttler 7 abgesenkt.
Anschliessend fährt die Abholvorrichtung 13 in den Arbeitsraum 10 der Vorrichtung 18 ein, die Abholstempel 16 werden in die Formen 4 der Kassette 3 ausgefahren und der Rüttel- oder Ausblasvorgang wird ausgeführt. Die Käselaibe K werden von der Formwand gelöst und liegen auf den Abholstempeln 16 auf. Danach wird die Kassette 3 angehoben, wieder um 180° in die Ausgangslage gedreht und zur Kassettenpresse 1 verfahren.

Die Abholstempel 16 werden mit den aufliegenden Käselaiben K in Richtung der Sekundärformen 14 vertikal verfahren (gesenkt) und nunmehr können die Spannbacken 11 die Käselaibe K spannen.
Danach wird die Abholvorrichtung 13 aus dem Arbeitsraum 10 ausgefahren und der Hubgreifer 12 soweit absenkend zur Förderstrecke 6 verfahren, dass die Käselaibe K in die Sekundärformen 14 gleiten können, wozu vorgängig auch die Spannbacken 11 wieder geöffnet werden.
Anschliessend wird der Hubgreifer 12 bis zu seiner Ausgangslage angehoben. Auf der Förderstrecke 6 werden die Sekundärformen 14 zu einer anderen Arbeitsstation verfahren und nachfolgend werden leere Sekundärformen 14 zugeführt.

Die Vorrichtung 18 zur Handhabung der Käselaibe K mit einem Hubgreifer 12 gemäss Fig. 5 umfasst einen Rahmen 9 zur Aufnahme des Rüttlers 7 und der Wendeeinheit 8. Ein Heben und Senken der Kassette 3 wird durch das Handlinggerät 5 ermöglicht.
Die Vorrichtung 18 weist ebenfalls je einen Ausstosser 15 für jede Form 4 auf. Der Hubgreifer 12 ist zwischen der Kassette 3 und der Förderstrecke 6 vertikal bewegbar. Die Spanneinrichtungen des Hubgreifers 12 sind Spannbacken 11. Die Abholvorrichtung 13 befindet sich zwischen der Förderstrecke 6 und dem Hubgreifer 12 und ist horizontal verfahrbar.
Die Abholvorrichtung 13 ist mit den Ausstossern 15 bestückt, jeweils einem je Form 4 resp. Käselaib K.
Der Hubgreifer 12 ist elektromotorisch betrieben, während Abholvorrichtung 13, Ausstosser 15 und Spannbacken 11 zum Beispiel pneumatisch oder elektrisch betätigbar sind.

Zur Handhabung von, der Kassettenpresse 1 entnommenen Käselaiben K fährt die Abholvorrichtung 13 zunächst unter dem Hubgreifer 12 in den Arbeitsraum 10 der Vorrichtung 18 ein und anschliessend wird der Hubgreifer 12 bis zum Anschlagen an der Abholvorrichtung 13 gesenkt.

Die bereits zugeführte Kassette 3 wird mit den Formen 4 um 180° gewendet, in den Rüttler 7 abgesenkt und über die Abholvorrichtung 13 gestülpt und der Rüttel- oder Ausblasvorgang wird ausgeführt.
Die Käselaibe K werden von der Formwand gelöst und liegen auf der Abholvorrichtung 13 auf.
Danach wird die Kassette 3 angehoben, wieder um 180° in die Ausgangslage gedreht und zur Kassettenpresse 1 verfahren.
Der Hubgreifer 12 wird soweit angehoben, dass die Abholvorrichtung 13 unter ihm ausfahren kann. Nunmehr können die Spannbacken 11 die Käselaibe K spannen. Danach wird der Hubgreifer 12 absenkend soweit zur Förderstrecke 6 verfahren, dass die Abholvorrichtung 13 erneut in den Arbeitsraum 10 einfahren und die Käselaibe K mit ihren Ausstossern 15 in die Sekundärformen 14 einschieben kann, wozu vorgängig auch die Spannbacken 11 wieder geöffnet werden können (optional).
Anschliessend fahren die Ausstosser 15 wieder in die Abholvorrichtung 13 ein und die Abholvorrichtung 13 fährt aus dem Arbeitsraum 10 aus und der Hubgreifer 12 wird bis zu seiner Ausgangslage angehoben.
Auf der Förderstrecke 6 werden die Sekundärformen 14 zu einer anderen Arbeitsstation verfahren und leere Sekundärformen 14 werden zugeführt.

Die Spannbacken 11 können in einem Spannbalken 10 angeordnet sein und werden gemeinsam über den Spannbalken 10 betätigt (Fig. 4).

Die Rüttelbewegung wird bevorzugt horizontal ausgeführt und erfolgt mindestens einmal.

Die Käselaibe K sind sowohl auf der Abholvorrichtung 13 als auch in den Sekundärformen 14 definiert gelagert und es ist kein manueller Zugriff erforderlich.

Die Hubgreifer 12 sind grundsätzlich für alle Käseformen einsetzbar.

### Bezugszeichen

- 1: Kassettenpresse
- 2: Wanne
- 3: Kassette
- 4: Form
- 5: Handlinggerät
- 6: Förderstrecke
- 7: Rüttler
- 8: Wendeeinheit
- 9: Rahmen
- 10: Arbeitsraum
- 11: Spannbacken
- 12: Hubgreifer
- 13: Abholvorrichtung
- 14: Sekundärform
- 15: Ausstosser
- 16: Abholstempel
- 17: Spannrahmen
- 18: Vorrichtung
- K: Käselaib

## Patentansprüche

1. Verfahren zur Handhabung von Käselaiben, insbesondere von Käselaiben, die vorgängig aus einer Käserohmasse in Formen (4) einer Kassettenpresse, die bevorzugt in einer Kassette (3) angeordnet sind, gepresst wurden, die gepresste Käserohmasse anschliessend nach einem Wendevorgang von der Innenwand der Form (4) gelöst und aus der Form (4) entleert wird, wobei die Form (4) gedreht, gesenkt und gerüttelt oder ausgeblasen wird,
**dadurch gekennzeichnet, dass**
a) die Form (4) resp. die Kassette (3) mit den Formen (4) gedreht und abgesenkt wird und ein Abholstempel (16) bis an den Käselaib (K) in die Form (4) einfährt,
b) ein Hubgreifer (12) während der Senkbewegung der Form (4) resp. der Kassette (3) bis zum Anschlag an eine Abholvorrichtung (13) abgesenkt wird,
c) der Käselaib (K) in der Form (4) einer Rüttelbewegung oder einem Ausblasvorgang ausgesetzt wird,
d) der Abholstempel (16) nach dem Rütteln oder Ausblasen wieder aus der Form (4) ausfährt,
e) die Form (4) resp. Kassette (3) nachfolgend angehoben, gedreht und in ihre Ausgangslage in die Kassettenpresse zurückgeführt und der Hubgreifer (12) angehoben wird,
f) der Käselaib (K) mittels einer Spanneinrichtung auf dem Hubgreifer (12) fixiert wird,
g) der Hubgreifer (12) zu einer Sekundärform (14) für den Käselaib hin, bevorzugt nach unten verfahren wird, und
h) die Spanneinrichtung öffnet und der Käselaib in der Sekundärform (14) positioniert wird.

2. Verfahren nach Anspruch 1, **dadurch gekennzeichnet, dass** vor dem Schritt a) eine Abholvorrichtung (13) weitgehend vertikal in die Vorrichtung eingefahren wird.

3. Verfahren nach Anspruch 1 oder 2, **dadurch gekennzeichnet, dass** der Abholstempel (16) nach dem Schritt c) mit dem darauf befindlichen Käselaib (K) ausgefahren wird,

4. Verfahren nach einem der Ansprüche 1 bis 3, **dadurch gekennzeichnet, dass** die Kassette (3) resp. die Form (4) über eine Abholvorrichtung (13) gestülpt wird.

5. Verfahren nach einem der Ansprüche 1 bis 4, **dadurch gekennzeichnet, dass** die Rüttelbewegung horizontal oder vertikal ausgeführt wird und mindestens einmal erfolgt.

6. Verfahren nach einem der Ansprüche 1 bis 5, **dadurch gekennzeichnet, dass** der Käselaib (K) in die Sekundärform (14) gleitet oder eingeschoben wird.

7. Verfahren nach Anspruch 1, **dadurch gekennzeichnet, dass** der Abholstempel (16) vor dem Rütteln in die Form (4) geführt wird.

8. Verfahren nach Anspruch 1, **dadurch gekennzeichnet, dass** der Hubgreifer (12) nach dem Schritt g) in seiner Ausgangsposition zurückgeführt wird.

9. Verfahren nach Anspruch 1, **dadurch gekennzeichnet, dass** die Abholvorrichtung (13) nach dem Verfahren des Hubgreifers (12) zur Sekundärform (14) einfährt und nach dem einschieben der Käselaibe (K) in die Sekundärform (14) ein Ausstosser (15) in seine Ausgangslage eingefahren wird.

10. Vorrichtung zur Handhabung von Käselaiben, insbesondere von Käselaiben, die aus einer Käserohmasse in Formen (4) einer Kassettenpresse (1) gepresst werden, wobei mindestens eine und bevorzugt mehrere Formen (4) in einer Kassette (3) angeordnet sind und wobei Einrichtungen zum Rütteln, Anheben, Senken und Drehen der Formen (4) resp. Kassetten (3) vorgesehen sind, wobei die Einrichtungen zum Rütteln einer horizontal angeordneten Ablage oder Förderstrecke (6) zugeordnet sind,
**dadurch gekennzeichnet, dass** die Vorrichtung einen hubfähig gelagerten, der Förderstrecke (6) zugeordneten Greifer umfasst, der mit mindestens einem Abholstempel (13) und einer Einrichtung zum Spannen der Käselaibe (K) versehen ist.

11. Vorrichtung nach Anspruch 10, **dadurch gekennzeichnet, dass** der Greifer ein Hubgreifer (12) ist, der zwischen der Förderstrecke (6) und den Formen (4) resp. der Kassette (3) in vertikaler Richtung bewegbar angeordnet ist.

12. Vorrichtung nach Anspruch 10 oder 11, **dadurch gekennzeichnet, dass** die Einrichtungen zum Spannen der Käselaibe (K) Spannbacken (11) umfassen und am Hubgreifer (12) angeordnet sind.

13. Vorrichtung nach einem der Ansprüche 10 bis 12, **dadurch gekennzeichnet, dass** der Hubgreifer (12), die Abholvorrichtung (13), Spannbacken (11) und Ausstosser (15) pneumatisch oder elektrisch betätigbar sind.

## Claims

1. A method for handling cheese loafs, in particular cheese loafs which were previously pressed from a cheese raw mixture in molds (4) of a cassette press, which are preferably arranged in a cassette (3), which is then released and emptied from the mold (4) after a turning operation from the inner wall of the mold (4), wherein the mold (4) is rotated, lowered and shaken or blown out, **characterized in that**
a) the mold (4) or the cassette (3) with the molds (4) is rotated and lowered, and a pick-up punch (16) goes into the mold (4) until it reaches the cheese loaf (K),
b) a lifting gripper (12) is lowered to the stop on a pick-up device (13) during the lowering movement of the mold (4) or the cassette (3),
c) the cheese loaf (K) in the mold (4) is subjected to a shaking movement or a blowing-out process
d) the pick-up punch (16) extends again from the mold (4) after the shaking or blowing out,
e) the mold (4) or cassette (3) is subsequently raised, rotated and returned to its initial position into the cassette press and the lifting gripper (12) is lifted,
f) the cheese loaf (K) is fixed on the lifting gripper (12) by means of a clamping device,
g) the lifting gripper (12) is moved towards a secondary mold (14) for the cheese loaf, preferably downwards, and
h) the clamping device opens and the cheese loaf is positioned in the secondary mold (14) .

2. The method according to claim 1, **characterized in that** prior to step a), a pick-up device (13) is retracted largely vertically into the device.

3. The method according to claim 1 or 2, **characterized in that** after step c), the pick-up punch (16) is extended with the cheese loaf (K) located thereon.

4. The method according to one of claims 1 to 3, **characterized in that** the cassette (3) or the mold (4) is put out over a pick-up device (13).

5. The method according to one of claims 1 to 4, **characterized in that** the shaking movement is carried out horizontally or vertically and takes place at least once.

6. The method according to one of claims 1 to 5, **characterized in that** the cheese loaf (K) slides or is inserted into the secondary mold (14).

7. The method according to claim 1, **characterized in that** the pick-up punch (16) is guided into the mold (4) before shaking.

8. The method according to claim 1, **characterized in that** the lifting gripper (12) is returned to its initial position after step g).

9. The method according to claim 1, **characterized in that** the pick-up device (13) retracts according to the method of the lifting gripper (12) into the secondary mold (14) and an ejector (15) is retracted into its initial position after the inserting of the cheese loaves (K) into the secondary mold (14).

10. A device for handling cheese loaves, in particular cheese loaves that are pressed from a cheese raw mass into molds (4) of a cassette press (1), wherein at least one and preferably several molds (4) are arranged in a cassette (3) and wherein means for shaking, lifting, lowering and rotating the molds (4) or cassettes (3) are provided, wherein the means for shaking are associated with a horizontally arranged tray or conveyor line (6), **characterized in that** the device comprises a liftably mounted gripper associated with the conveyor line (6), which gripper is provided with at least one pick-up punch (13) and a means for clamping the cheese loaves (K).

11. The device according to claim 10, **characterized in that** the gripper is a lifting gripper (12) which is arranged movable in the vertical direction between the conveyor line (6) and the molds (4) or the cassette (3).

12. The device according to claim 10 or 11, **characterized in that** the means for clamping the cheese loaves (K) comprise clamping jaws (11) and are arranged on the lifting gripper (12).

13. The device according to one of claims 10 to 12, **characterized in that** the lifting gripper (12), the pick-up device (13), clamping jaws (11) and ejector (15) are pneumatically or electrically actuated.

## Revendications

1. Procédé, destiné à manipuler des meules de fromage, notamment des meules de fromage qui ont été pressées précédemment à partir d'une masse brute de fromage dans des moules (4) d'une presse à cassettes, qui sont placées de préférence dans une cassette (3), lors duquel, après un processus de retournement, les masses brutes de fromage sont ensuite détachées de la paroi intérieure du moule (4) et sorties du moule (4), le moule (4) étant retourné, abaissé et secoué ou soufflé, **caractérisé**
a) **en ce qu'**on retourne et on abaisse le moule (4), respectivement la cassette (3) avec les moules (4) et un poinçon de retrait (16) rentre dans le moule (4) jusqu'à la meule de fromage (K),
b) **en ce que** pendant l'abaissement du moule (4), respectivement de la cassette (3), on abaisse une pince de levage (12) jusqu'en butée sur un dispositif de retrait (13),
c) **en ce qu'**on soumet la meule de fromage (K) dans le moule (4) à un mouvement de secousses ou à un processus de soufflage,
d) **en ce qu'**après le mouvement de secousses ou le soufflage, le poinçon de retrait (16) ressort du moule (4),
e) **en ce que** par la suite, on relève, on retourne et on ramène le moule (4), respectivement la cassette (3) dans sa position initiale dans la presse à cassettes et on relève la pince de levage (12) est relevée,
f) **en ce qu'**on fixe la meule de fromage (K) au moyen d'un système de serrage sur la pince de levage (12),
g) **en ce qu'**on déplace la pince de levage (12) de préférence vers le bas vers un moule secondaire (14) pour la meule de fromage et
h) **en ce qu'**on ouvre le système de serrage s'ouvre et on positionne la meule de fromage dans le moule secondaire (14).

2. Procédé selon la revendication 1, **caractérisé en ce qu'**avant l'étape a), on fait rentrer un dispositif de retrait (13) amplement à la verticale dans le dispositif.

3. Procédé selon la revendication 1 ou 2, **caractérisé en ce qu'**après l'étape c), on fait ressortir le poinçon de retrait (16) avec la meule de fromage (K) placée sur celui-ci.

4. Procédé selon l'une quelconque des revendications 1 à 3, **caractérisé en ce qu'**on retourne la cassette (3) respectivement le moule (4) par-dessus le dispositif de retrait (13).

5. Procédé selon l'une quelconque des revendications 1 à 4, **caractérisé en ce que** le mouvement de secousses s'effectue à l'horizontale ou à la verticale et a lieu au moins une fois.

6. Procédé selon l'une quelconque des revendications 1 à 5, **caractérisé en ce que** la meule de fromage (K) glisse dans le moule secondaire (14) ou on l'y introduit.

7. Procédé selon la revendication 1, **caractérisé en ce qu'**avant les secousses, on guide le poinçon de retrait (16) dans le moule (4).

8. Procédé selon la revendication 1, **caractérisé en ce qu'**après l'étape g), on ramène la pince de levage (12) dans sa position initiale.

9. Procédé selon la revendication 1, **caractérisé en ce qu'**après le déplacement de la pince de levage (12), le que dispositif de retrait (13) rentre dans le moule secondaire (14) et après l'insertion des meules de fromage (K) dans le moule secondaire (14), on fait rentrer un expulseur (15) dans sa position initiale.

10. Dispositif destiné à manipuler des meules de fromage, notamment des meules de fromage qui sont pressées à partir d'une masse brute de fromage dans des moules (4) d'une presse à cassettes (1), au moins un et de préférence plusieurs moules (4) étant placés dans une cassette (3) et des systèmes étant prévus pour secouer, relever, abaisser et retourner les moules (4), respectivement les cassettes (3), les systèmes destinés à secouer étant associés à un emplacement de dépose ou à un trajet de convoyage (6) placé à l'horizontale, **caractérisé en ce que** le dispositif comprend une pince logée en étant susceptible de se lever, associée au trajet de convoyage (6) qui est munie d'au moins un poinçon de retrait (13) et d'un système destiné à serrer les meules de fromage (K).

11. Dispositif selon la revendication 10, **caractérisé en ce que** la pince est une pince de levage (12) qui est placée en étant déplaçable dans la direction verticale entre le trajet de convoyage (6) et les moules (4), respectivement la cassette (3).

12. Dispositif selon la revendication 10 ou 11, **caractérisé en ce que** les systèmes destinés à serrer les meules de fromage (K) comprennent des mâchoires de serrage (11) et sont placés sur la pince de levage (12).

13. Dispositif selon l'une quelconque des revendications 10 à 12, **caractérisé en ce que** la pince de levage (12), le dispositif de retrait (13), les mâchoires de serrage (11) et l'expulseur (15) sont actionnables par moyen pneumatique ou électrique.
